# EUROPEAN PATENT SPECIFICATION

(11) **EP 2 999 153 B1**
(45) Date of publication and mention of the grant of the patent: **09.08.2017**
(21) Application number: 13887337.7
(22) Date of filing: 19.06.2013
(51) Int. Cl.: H04W 28/02, H04L 12/855, H04L 12/863, H04L 12/865, H04L 12/823

(54) **MESSAGE PROCESSING METHOD AND BASE STATION**
NACHRICHTENVERARBEITUNGSVERFAHREN UND BASISSTATION
PROCÉDÉ DE TRAITEMENT DE MESSAGE ET STATION DE BASE

(43) Date of publication of application: 23.03.2016
(73) Proprietor: Huawei Technologies Co., Ltd., Longgang District Shenzhen, Guangdong 518129 (CN)
(72) Inventor: YANG, Zhensen, Shenzhen Guangdong 518129 (CN); SHI, Yangyang, Shenzhen Guangdong 518129 (CN)
(74) Representative: Epping - Hermann - Fischer
(86) International application number: PCT/CN2013/077464
(87) International publication number: WO 2014/201635

(56) References cited:
- CN-A- 1 747 434
- CN-A- 101 056 264
- CN-A- 101 505 260
- CN-A- 102 487 494
- KR-A- 20130 032 152
- US-A1- 2012 096 045
- US-A1- 2013 148 504

## Description

### TECHNICAL FIELD

The present invention relates to the field of communications technologies, specifically, to the field of message processing technologies of a base station, and more particularly, to a message processing method and base station.

### BACKGROUND

As the long term evolution (Long Term Evolution, LTE) network technologies become increasingly mature, a quantity of LTE network users increases gradually, and a base station also needs to process an increasing quantity of messages; therefore, a probability of overload in the base station also increases.

When detecting that a quantity of messages to be processed reaches a preset threshold, for example, when detecting that usage of a central processing unit (Central Processing Unit, CPU) of a base station reaches 80%, an existing base station may enter an overload flow control state. The base station performs flow control on all messages received after entering the overload flow control state, and discards messages that are beyond a processing capability of the base station.

The base station processes the messages in a first in first out manner, and therefore, when entering the overload flow control state, the base station is likely to discard some important messages, such as a handover message. If the handover message is discarded, a user is caused to disconnect from a network, thereby directly affecting user experience, and reducing message processing intelligence of the base station.

US 2013/0148504 A1 relates to a method in an element having a queue used to store messages sent from a message sender to a message receiver, of handling congestion in the queue without discarding a new message from the message sender. The method comprises the steps of receiving the new message, of a given message type, which is to be added to the queue; determining that congestion handling is to be performed; performing the congestion handling by removing older messages, of the given message type, from the queue; and adding the new message to the queue.

### SUMMARY

Embodiments of the present invention are defined by the claims. A message processing method is provided, which can improve message processing intelligence of a base station, and improve user experience.

To solve the foregoing technical problem, a first aspect provides a message processing method, which may include:
determining, by a base station when receiving at least one overload message in an overload flow control state, a message type of the received overload message;
updating a message processing queue according to the message type of the received overload message; and
sequentially processing messages in the message processing queue.

Based on the first aspect, in a first feasible implementation manner of the first aspect, message type priorities are preset in the base station, and the updating a message processing queue according to the message type of the received overload message may include:
sorting received overload messages according to the message type priorities and according to message types of the received overload messages, to form an overload message sequence; and
sequentially adding messages in the overload message sequence to the message processing queue until a quantity of messages in the message processing queue is beyond a processing capability of the base station.

Based on the first feasible implementation manner of the first aspect, in a second feasible implementation manner of the first aspect, the method may further include:
discarding, when the quantity of messages in the message processing queue is beyond the processing capability of the base station, an overload message that is in the overload message sequence and is not added to the message processing queue.

Based on the first aspect, in a third feasible implementation manner of the first aspect, the updating a message processing queue according to the message type of the received overload message may include:
collecting statistics about a quantity of overload messages that belong to a first type in the received overload messages, where the first type is any message type in all message types to which the received overload messages belong; and
when the quantity of overload messages of the first type is greater than a first preset threshold corresponding to the first type, deleting an overload message that belongs to the first message type, until a quantity of remaining overload messages that belong to the first type after the deletion is less than or equal to the first preset threshold, and adding, to the message processing queue, the remaining overload messages that belong to the first type; or
when the quantity of overload messages of the first type is less than or equal to a first preset threshold corresponding to the first type, adding the received overload message to the message processing queue.

Based on the third feasible implementation manner of the first aspect, in a fourth feasible implementation manner of the first aspect, the deleting an overload message that belongs to the first message type may include:
deleting a preset quantity of overload messages of the first type within each time step.

Based on the first aspect, in a fifth feasible implementation manner of the first aspect, message type information is preset in the base station, and the updating a message processing queue according to the message type of the received overload message may include:
when the message type of the received overload message belongs to a preset message type, adding the overload message to the message processing queue; or
when the message type of the received overload message does not belong to a preset message type, discarding the overload message.

A second aspect provides a base station, which may include:
a determining module, configured to: when a base station in an overload flow control state receives at least one overload message, determine a message type of the received overload message;
a queue updating module, configured to update a message processing queue according to the message type of the received overload message; and
a message processing module, configured to sequentially process messages in the message processing queue.

Based on the second aspect, in a first feasible implementation manner of the second aspect, the base station further includes:
a first storage module, configured to store preset message type priorities, where the queue updating module includes:
   a message sorting unit, configured to sort received overload messages according to the message type priorities and according to message types of the received overload messages, to form an overload message sequence; and
   a first adding unit, configured to sequentially add messages in the overload message sequence to the message processing queue until a quantity of messages in the message processing queue is beyond a processing capability of the base station.

Based on the first feasible implementation manner of the second aspect, in a second feasible implementation manner of the second aspect, the queue updating module further includes:
a first discarding unit, configured to: when the quantity of messages in the message processing queue is beyond the processing capability of the base station, discard an overload message that is in the overload message sequence and is not added to the message processing queue.

Based on the second aspect, in a third feasible implementation manner of the second aspect, the queue updating module includes:
a message statistics-collecting unit, configured to collect statistics on a quantity of overload messages that belong to a first type in the received overload messages, where the first type is any message type in all message types to which the received overload messages belong;
a first processing unit, configured to: when the quantity of overload messages of the first type is greater than a first preset threshold corresponding to the first type, delete an overload message that belongs to the first message type, until a quantity of remaining overload messages that belong to the first type after the deletion is less than or equal to the first preset threshold, and add, to the message processing queue, the remaining overload messages that belong to the first type; and
a second processing unit, configured to: when the quantity of overload messages of the first type is less than or equal to the first preset threshold corresponding to the first type, add the received overload message to the message processing queue.

Based on the third feasible implementation manner of the second aspect, in a fourth feasible implementation manner of the second aspect, the first processing unit is specifically configured to:
when the quantity of overload messages of the first type is greater than the first preset threshold corresponding to the first type, delete a preset quantity of overload messages of the first type within each time step, until a quantity of remaining overload messages that belong to the first type after the deletion is less than or equal to the first preset threshold, and add, to the message processing queue, the remaining overload messages that belong to the first type.

Based on the second aspect, in a fifth feasible implementation manner of the second aspect, the base station further includes:
a second storage module, configured to store preset message type information, where the queue updating module includes:
   a second adding unit, configured to: when the message type of the received overload message belongs to a preset message type, add the overload message to the message processing queue; and
   a second discarding unit, configured to: when the message type of the received overload message does not belong to a preset message type, discard the overload message.

A third aspect provides a base station, which may include: a receiver, a memory, and a processor that is separately connected to the receiver and the memory, where the receiver is configured to receive a message, the memory stores program code, the processor is configured to invoke the program code stored in the memory, and the processor performs the following steps:
when the receiver of the base station in an overload flow control state receives at least one overload message, determining a message type of the received overload message;
updating a message processing queue according to the message type of the received overload message; and
sequentially processing messages in the message processing queue.

Based on the third aspect, in a first feasible implementation manner of the third aspect, message type priorities are preset in the memory, and when updating the message processing queue according to the message type of the received overload message, the processor specifically performs the following steps:
sorting received overload messages according to the message type priorities and according to message types of the received overload messages, to form an overload message sequence; and
sequentially adding messages in the overload message sequence to the message processing queue until a quantity of messages in the message processing queue is beyond a processing capability of the base station.

Based on the first feasible implementation manner of the third aspect, in a second feasible implementation manner of the third aspect, the processor further performs the following steps:
discarding, when the quantity of messages in the message processing queue is beyond the processing capability of the base station, an overload message that is in the overload message sequence and is not added to the message processing queue.

Based on the third aspect, in a third feasible implementation manner of the third aspect, when updating the message processing queue according to the message type of the received overload message, the processor specifically performs the following steps:
collecting statistics about a quantity of overload messages that belong to a first type in the received overload messages, where the first type is any message type in all message types to which the received overload messages belong; and
when the quantity of overload messages of the first type is greater than a first preset threshold corresponding to the first type, deleting an overload message that belongs to the first message type, until a quantity of remaining overload messages that belong to the first type after the deletion is less than or equal to the first preset threshold, and adding, to the message processing queue, the remaining overload messages that belong to the first type; or
when the quantity of overload messages of the first type is less than or equal to a first preset threshold corresponding to the first type, adding the received overload message to the message processing queue.

Based on the third feasible implementation manner of the third aspect, in a fourth feasible implementation manner of the third aspect, when deleting an overload message that belongs to the first message type, the processor specifically performs the following steps:
deleting a preset quantity of overload messages of the first type within each time step.

Based on the third aspect, in a fourth feasible implementation manner of the third aspect, message type information is preset in the memory, and when updating the message processing queue according to the message type of the received overload message, the processor specifically performs the following steps:
when the message type of the received overload message belongs to a preset message type, adding the overload message to the message processing queue; or
when the message type of the received overload message does not belong to a preset message type, discarding the overload message.

A fourth aspect provides a computer program product, including a computer readable medium, where the computer readable medium includes a set of program code, used to perform all or part of the steps in the message processing method provided by the first aspect.

It can be known from the foregoing description that, a base station updates a message processing queue according to a message type of an overload message received in an overload flow control state, so that the base station can reserve and process some important messages, thereby reducing a probability that a user equipment cannot be properly used due to discarding of a message, improving message processing intelligence of the base station, and improving user experience.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a message processing method according to an embodiment of the present invention;
FIG. 2 is a schematic flowchart of another message processing method according to an embodiment of the present invention;
FIG. 3 is a schematic flowchart of still another message processing method according to an embodiment of the present invention;
FIG. 4 is a schematic flowchart of yet another message processing method according to an embodiment of the present invention;
FIG. 5 is a schematic structural diagram of a base station according to an embodiment of the present invention;
FIG. 6 is a schematic structural diagram of another base station according to an embodiment of the present invention;
FIG. 7 is a schematic structural diagram of still another base station according to an embodiment of the present invention;
FIG. 8 is a schematic structural diagram of yet another base station according to an embodiment of the present invention; and
FIG. 9 is a schematic structural diagram of yet another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the embodiments of the present invention, a CPU threshold may be preset in a base station for a CPU usage, for example, the CPU usage of the base station reaches 80%. When the base station processes a received message, if the CPU usage of the base station reaches the preset CPU threshold, the base station enters an overload flow control state. Alternatively, a number threshold may be preset for a quantity of unprocessed messages, for example, the quantity of unprocessed messages in the base station reaches 80; when the base station obtains, by collecting statistics, that the quantity of unprocessed messages in the base station reaches the preset number threshold, the base station enters an overload flow control state.

An overload message is at least one message received by the base station after entering an overload flow control state.

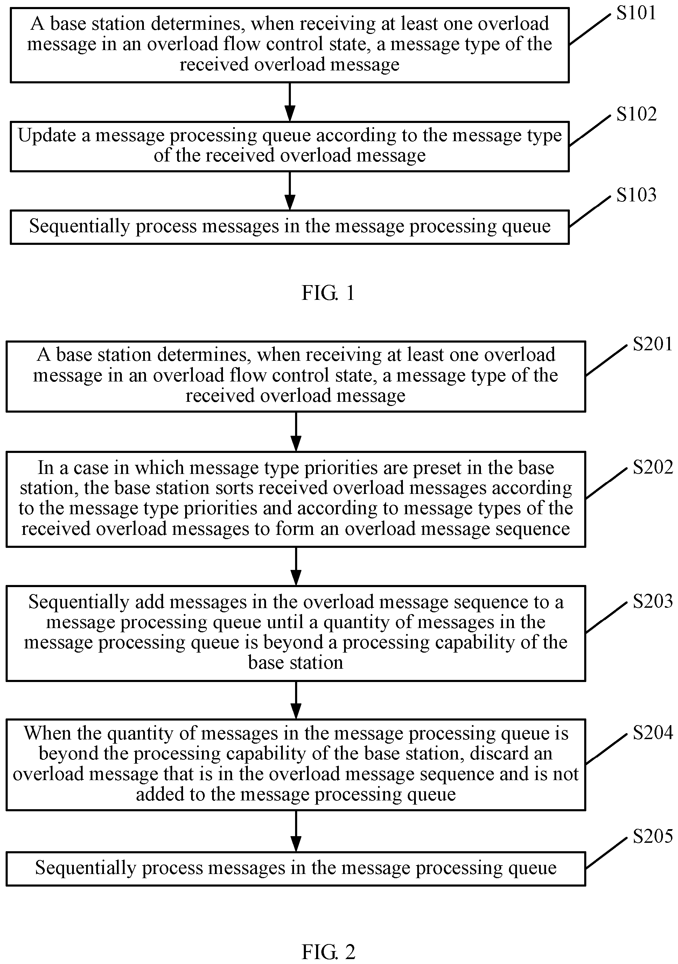

FIG. 1 is a schematic flowchart of a message processing method according to an embodiment of the present invention. As shown in FIG. 1, the method of the embodiment of the present invention may include the following step S101 to step S103.

S101. A base station determines, when receiving at least one overload message in an overload flow control state, a message type of the received overload message.

Specifically, when the base station is in the overload flow control state, and receives at least one overload message in the overload flow control state, the base station determines a message type of each overload message in received overload messages.

S102. Update a message processing queue according to the message type of the received overload message.

Specifically, the base station adjusts the received overload message according to the message type of the received overload message, and adds an adjusted overload message to the message processing queue to update the message processing queue.

It should be noted that, message type priorities may be preset in the base station; and the base station sorts the received overload messages according to the message type priorities and the message type of each overload message in the received overload messages, to form an overload message sequence, and sequentially adds messages in the overload message sequence to the message processing queue until a quantity of messages in the message processing queue is beyond a processing capability of the base station, where the processing capability of the base station is a maximum value of the quantity of messages that can be processed by the base station.

Optionally, a message type threshold corresponding to the message type of each overload message in the received overload messages may be set in the base station. The base station collects statistics on overload messages of each message type, and deletes an overload message of a message type exceeding a threshold, until the quantity of overload messages of the message type exceeding the threshold is less than or equal to a threshold corresponding to the message type exceeding the threshold, and adds overload messages that are not deleted to the message processing queue.

Optionally, message type information may be set in the base station for each message type, where the message type information may be preset categories of the message types. The base station determines the message type of the received overload message; when the message type of the received overload message belongs to a preset message type, adds the overload message to the message processing queue; and when the message type of the received overload message does not belong to the preset message type, discards the overload message.

S103. Sequentially process messages in the message processing queue.

Specifically, the base station performs response processing on the messages in the message processing queue according to a first in first out processing sequence.

In the embodiment of the present invention, a base station updates a message processing queue according to a message type of an overload message received in an overload flow control state, so that the base station can reserve and process some important messages, thereby reducing a probability that user equipment cannot be properly used due to discarding of a message, improving message processing intelligence of the base station, and improving user experience.

FIG. 2 is a schematic flowchart of another message processing method according to an embodiment of the present invention. As shown in FIG. 2, the method of the embodiment of the present invention may include the following step S201 to step S205.

S201. A base station determines, when receiving at least one overload message in an overload flow control state, a message type of the received overload message.

S202. In a case in which message type priorities are preset in the base station, the base station sorts received overload messages according to the message type priorities and according to message types of the received overload messages to form an overload message sequence.

Specifically, the message type priorities may be message type processing priorities. For a message type that has a deeper effect on user experience, such as a message type related to a handover request, network access, or bearer setup, a message type processing priority of the message type is higher. The base station sorts the received overload messages according to the preset message type processing priorities and according to the message types of the received overload messages, to form the overload message sequence.

Alternatively, the message type priorities may be message type deletion priorities, and for a message type that has a deeper effect on user experience, a message type deletion priority of the message type is lower. The base station sorts the received overload messages according to the preset message type deletion priorities and according to the message types of the received overload messages, to form the overload message sequence.

S203. Sequentially add messages in the overload message sequence to a message processing queue until a quantity of messages in the message processing queue is beyond a processing capability of the base station.

Specifically, the base station sequentially adds the messages in the overload message sequence to the message processing queue according to the message type processing priorities in a descending manner, or according to the message type deletion priorities in an ascending manner, until the quantity of messages in the message processing queue is beyond the processing capability of the base station, where the processing capability of the base station is a maximum value of the quantity of messages that can be processed by the base station.

S204. When the quantity of messages in the message processing queue is beyond the processing capability of the base station, discard an overload message that is in the overload message sequence and is not added to the message processing queue.

Specifically, when the quantity of messages in the message processing queue is beyond the processing capability of the base station, the base station discards the overload message that is in the overload message sequence and is not added to the message processing queue.

S205. Sequentially process messages in the message processing queue.

For step S201 and step S205 of the embodiment of the present invention, reference may be made to step S101 and step S103 of the embodiment shown in FIG. 1 respectively, and details are not repeatedly described herein.

In the embodiment of the present invention, a base station sorts received overload messages according to preset priorities, so that an important message may be put in the front of an overload message sequence, thereby avoiding discarding the important message when the base station performs overload flow control, further reducing a probability that user equipment cannot be properly used due to discarding of a message, improving message processing intelligence of the base station, and improving user experience.

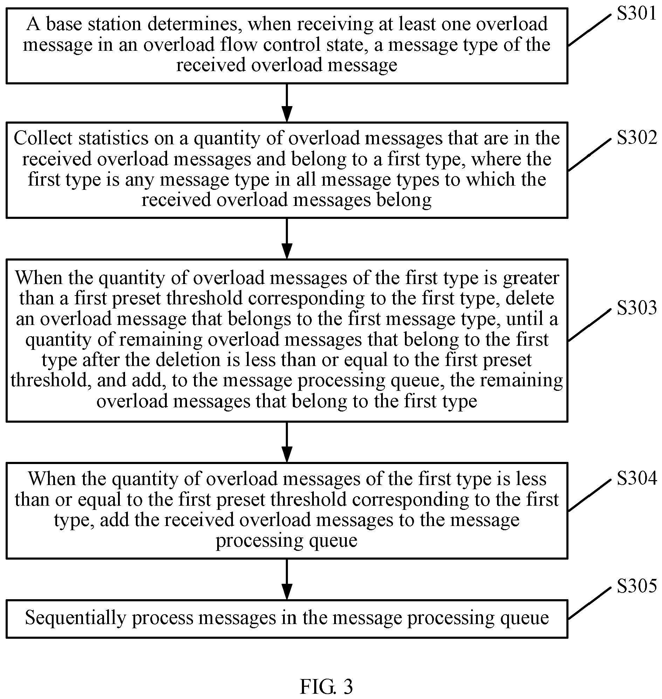

FIG. 3 is a schematic flowchart of still another message processing method according to an embodiment of the present invention. As shown in FIG. 3, the method of the embodiment of the present invention may include the following step S301 to step S305.

S301. A base station determines, when receiving at least one overload message in an overload flow control state, a message type of the received overload message.

S302. Collect statistics on a quantity of overload messages that belong to a first type in the received overload messages, where the first type is any message type in all message types to which the received overload messages belong.

Specifically, the base station collects statistics on the quantity of overload messages that belong to the first type in the received overload messages, where the first type is any message type in all message types to which each overload message in the received overload messages belongs.

S303. When the quantity of overload messages of the first type is greater than a first preset threshold corresponding to the first type, delete an overload message that belongs to the first message type, until a quantity of remaining overload messages that belong to the first type after the deletion is less than or equal to the first preset threshold, and add, to the message processing queue, the remaining overload messages that belong to the first type.

Specifically, a first preset threshold may be set correspondingly for the quantity of overload messages of the first type. For a message type that has a deeper effect on user experience, such as a message type related to a handover request, network access, or bearer setup, a preset threshold corresponding to the message type thereof is higher. A manner of setting the preset threshold may be that the base station configures in advance for each message type or may set a threshold priority for each message type. The base station dynamically allocates, according to the threshold priority of each message type, a preset threshold corresponding to each message type, and a sum of preset thresholds corresponding to all message types is less than the quantity of messages which the base station can still continue to process in an overload flow control state.

When the quantity of overload messages of the first type is greater than the first preset threshold corresponding to the first type, the base station deletes an overload message that belongs to the first type, until a quantity of remaining overload messages that belong to the first type after the deletion is less than or equal to the first preset threshold, and adds, to the message processing queue, the remaining overload messages that belong to the first type. It should be noted that a deletion manner may be that the base station deletes a preset quantity of overload messages of the first type within each time step. For example: in an overflow control state, for a message type of a network access message, when a preset threshold of this message type is 10, and 20 overload messages that belong to this message type are received, the base station may correspondingly delete 5 overload messages that belong to this message type every 1 second.

It should be noted that in a process of deleting the overload messages of the first type, when switching from an overload flow control state to a non-overload flow control state, the base station may not need to continue deleting the overload messages of the first type, and adds, to the message processing queue, the remaining overload messages that belong to the first type.

S304. When the quantity of overload messages of the first type is less than or equal to the first preset threshold corresponding to the first type, add the received overload message to the message processing queue.

Specifically, when the quantity of overload messages of the first type is less than or equal to the first preset threshold corresponding to the first type, the base station directly adds the received overload message to the message processing queue.

S305. Sequentially process messages in the message processing queue.

For step S301 and step S305 of the embodiment of the present invention, reference may be made to step S101 and step S103 of the embodiment shown in FIG. 1 respectively, and details are not repeatedly described herein.

In the embodiment of the present invention, a base station correspondingly presets a threshold for each message type, so as to ensure that a more important message type corresponds to a higher preset threshold, so that the base station can reserve an important message to a greatest extent in an overload flow control state, thereby reducing a probability that user equipment cannot be properly used due to discarding of a message, improving message processing intelligence of the base station, and improving user experience.

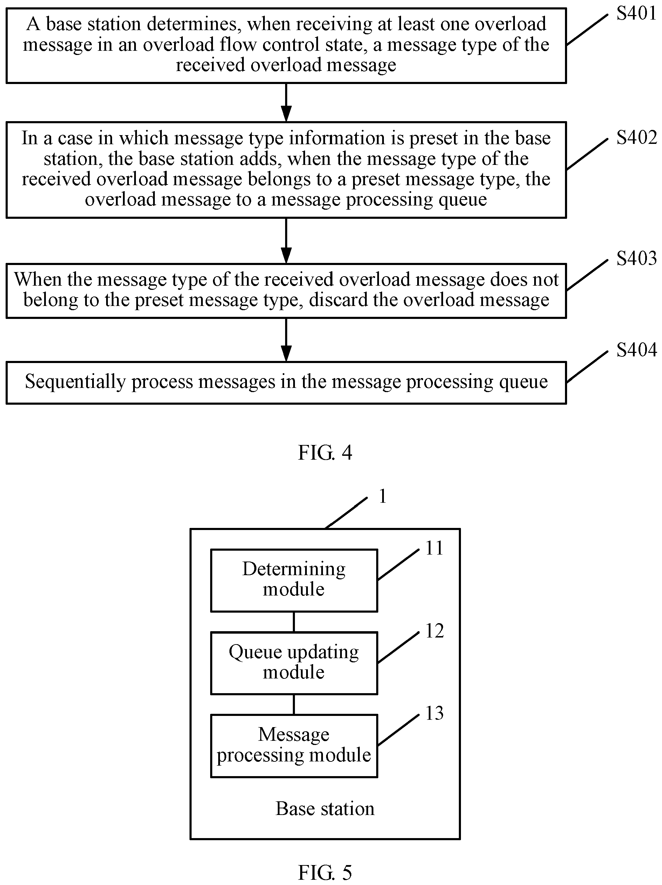

FIG. 4 is a schematic flowchart of yet another message processing method according to an embodiment of the present invention. As shown in FIG. 4, the method of the embodiment of the present invention may include the following step S401 to step S404.

S401. A base station determines, when receiving at least one overload message in an overload flow control state, a message type of the received overload message.

S402. In a case in which message type information is preset in the base station, the base station adds, when the message type of the received overload message belongs to a preset message type, the overload message to a message processing queue.

Specifically, the base station may preset message type information, where the message type information may be preset categories of the message types, and the preset message type may be a message type that affects user experience, such as a message type related to a handover request, network access, or bearer setup. When the message type of the received overload message belongs to one of categories of the preset message types, the base station adds the overload message that belongs to the preset message type to the message processing queue.

S403. When the message type of the received overload message does not belong to the preset message type, discard the overload message.

Specifically, when the message type of the received overload message does not belong to the preset message type, the base station discards the overload message that does not belong to the preset message type.

S404. Sequentially process messages in the message processing queue.

For step S401 and step S404 of the embodiment of the present invention, reference may be made to step S101 and step S103 of the embodiment shown in FIG. 1 respectively, and details are not repeatedly described herein.

In the embodiment of the present invention, a base station determines, by using preset message type information, whether a message type of a received overload message belongs to a preset message type, so that an important message can be reserved, thereby avoiding discarding the important message when the base station performs overload flow control, further reducing a probability that user equipment cannot be properly used due to discarding of a message, improving message processing intelligence of the base station, and improving user experience.

The embodiment of the present invention further discloses a computer program product, where the computer program product includes a computer readable medium, where the computer readable medium may include a set of program code, and the program code is used to perform part or all of the steps of the message processing method described in the foregoing method embodiment.

In the embodiment of the present invention, a base station updates a message processing queue according to a message type of an overload message received in an overload flow control state, so that the base station can reserve and process some important messages, thereby reducing a probability that user equipment cannot be properly used due to discarding of a message, improving message processing intelligence of the base station, and improving user experience.

FIG. 5 is a schematic structural diagram of a base station according to an embodiment of the present invention. As shown in FIG. 5, the base station 1 of the embodiment of the present invention may include a determining module 11, a queue updating module 12, and a message processing module 13.

The determining module 11 is configured to: when the base station in an overload flow control state receives at least one overload message, determine a message type of the received overload message.

In a specific implementation, when the base station 1 receives at least one overload message in the overload flow control state, the determining module 11 determines a message type of each overload message in received overload messages.

The queue updating module 12 is configured to update a message processing queue according to the message type of the received overload message.

In a specific implementation, the queue updating module 12 adjusts the received overload message according to the message type of the overload message received by the determining module 11, and the queue updating module 12 adds an adjusted overload message to the message processing queue to update the message processing queue.

It should be noted that, message type priorities may be preset in the base station 1, and the queue updating module 12 sorts the received overload messages according to the message type priorities and the message type of each overload message in the received overload messages, to form an overload message sequence, and sequentially adds messages in the overload message sequence to the message processing queue until a quantity of messages in the message processing queue is beyond a processing capability of the base station, where the processing capability of the base station is a maximum value of the quantity of messages that can be processed by the base station.

Optionally, a message type threshold corresponding to the message type of each overload message in the received overload messages may be set in the base station 1. The queue updating module 12 collects statistics on overload messages of each message type, and deletes the overload messages of a message type exceeding a threshold, until the quantity of overload messages of the message type exceeding the threshold is less than or equal to a threshold corresponding to the message type exceeding the threshold, and adds overload messages that are not deleted to the message processing queue.

Optionally, message type information may be set in the base station 1 for each message type, where the message type information may be preset categories of the message types. The queue updating module 12 determines the message type of the received overload message; when the message type of the received overload message belongs to the preset message type, adds the overload message to the message processing queue; and when the message type of the received overload message does not belong to a preset message type, discards the overload message.

The message processing module 13 is configured to sequentially process the messages in the message processing queue.

In a specific implementation, the message processing module 13 performs response processing on the messages in the message processing queue according to a first in first out processing sequence.

In the embodiment of the present invention, a base station updates a message processing queue according to a message type of an overload message received in an overload flow control state, so that the base station can reserve and process some important messages, thereby reducing a probability that user equipment cannot be properly used due to discarding of a message, improving message processing intelligence of the base station, and improving user experience.

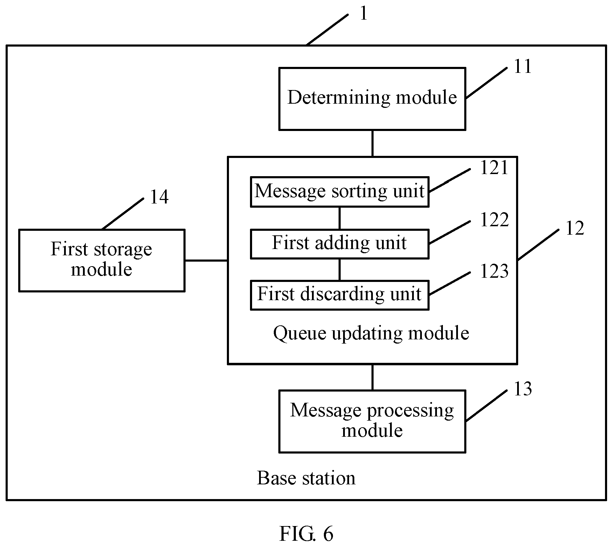

FIG. 6 is a schematic structural diagram of another base station according to an embodiment of the present invention. As shown in FIG. 6, the base station 1 of the embodiment of the present invention may include a determining module 11, a queue updating module 12, a message processing module 13, and a first storage module 14.

The determining module 11 is configured to: when the base station in an overload flow control state receives at least one overload message, determine a message type of the received overload message.

In a specific implementation, when the base station 1 receives at least one overload message in the overload flow control state, the determining module 11 determines a message type of each overload message in received overload messages.

The first storage module 14 is configured to store preset message type priorities.

In a specific implementation, the message type priorities are preset in the base station 1, and the first storage module 14 stores the message type priorities.

The queue updating module 12 is configured to update a message processing queue according to the message type of the received overload message.

In a specific implementation, the queue updating module 12 adjusts the received overload message according to the message type of the overload message received by the determining module 11, and the queue updating module 12 adds an adjusted overload message to the message processing queue to update the message processing queue.

It should be noted that, the queue updating module 12 sorts the received overload messages according to the preset message type priorities stored in the first storage module 14 and the message type of each overload message in the received overload messages, to form an overload message sequence, and sequentially adds messages in the overload message sequence to the message processing queue until a quantity of messages in the message processing queue is beyond a processing capability of the base station, where the processing capability of the base station is a maximum value of the quantity of messages that can be processed by the base station.

Specifically, the queue updating module 12 of the embodiment of the present invention may include:
A message sorting unit 121 is configured to sort the received overload messages according to the message type priorities and according to the message types of the received overload messages to form the overload message sequence.

In a specific implementation, the message type priorities may be message type processing priorities. For a message type that has a deeper effect on user experience, such as a message type related to a handover request, network access, or bearer setup, a message type processing priority of the message type is higher. The message sorting unit 121 sorts the received overload messages according to the preset message type processing priorities stored in the first storage module 14 and according to the message types of the received overload messages, to form the overload message sequence.

Alternatively, the message type priorities may further be message type deletion priorities, and for a message type that has a deeper effect on user experience, a message type deletion priority of the message type is lower. The message sorting unit 121 sorts the received overload messages according to the preset message type deletion priorities stored in the first storage module 14 and according to the message types of the received overload messages, to form the overload message sequence.

A first adding unit 122 is configured to sequentially add the messages in the overload message sequence to the message processing queue until a quantity of messages in the message processing queue is beyond the processing capability of the base station.

In a specific implementation, the first adding unit 122 sequentially adds the messages in the overload message sequence to the message processing queue according to the message type processing priorities in a descending manner, or according to the message type deletion priorities in an ascending manner, until the quantity of messages in the message processing queue is beyond the processing capability of the base station 1, where the processing capability of the base station 1 is a maximum value of the quantity of messages that can be processed by the base station 1.

A first discarding unit 123 is configured to: when the quantity of messages in the message processing queue is beyond the processing capability of the base station, discard an overload message that is in the overload message sequence and is not added to the message processing queue.

In a specific implementation, when the quantity of messages in the message processing queue is beyond the processing capability of the base station 1, the first discarding unit 123 discards the overload message that is in the overload message sequence and is not added to the message processing queue.

The message processing module 13 is configured to sequentially process the messages in the message processing queue.

In a specific implementation, the message processing module 13 performs response processing on the messages in the message processing queue according to a first in first out processing sequence.

In the embodiment of the present invention, a base station sorts received overload messages according to preset priorities, so that an important message may be put in the front of an overload message sequence, thereby avoiding discarding the important message when the base station performs overload flow control, further reducing a probability that user equipment cannot be properly used due to discarding of a message, improving message processing intelligence of the base station, and improving user experience.

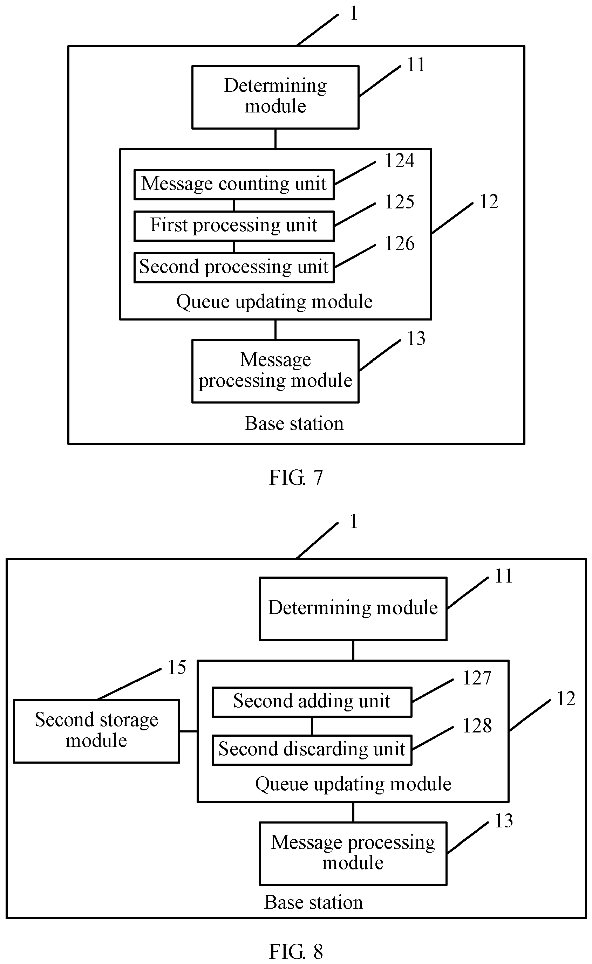

FIG. 7 is a schematic structural diagram of still another base station according to an embodiment of the present invention. As shown in FIG. 7, the base station 1 of the embodiment of the present invention may include a determining module 11, a queue updating module 12, and a message processing module 13.

The determining module 11 is configured to: when a base station in an overload flow control state receives at least one overload message, determine a message type of the received overload message.

In a specific implementation, when the base station 1 receives at least one overload message in the overload flow control state, the determining module 11 determines a message type of each overload message in the received overload messages.

The queue updating module 12 is configured to update a message processing queue according to the message type of the received overload message.

In a specific implementation, the queue updating module 12 adjusts the received overload message according to the message type of the overload message received by the determining module 11, and the queue updating module 12 adds an adjusted overload message to the message processing queue to update the message processing queue.

It should be noted that a message type threshold corresponding to the message type of each overload message in the received overload messages may be set in the base station 1. The queue updating module 12 collects statistics on overload messages of each message type, and deletes the overload messages of a message type exceeding a threshold, until the quantity of overload messages of the message type exceeding the threshold is less than or equal to a threshold corresponding to the message type exceeding the threshold, and adds overload messages that are not deleted to the message processing queue.

Specifically, the queue updating module 12 of the embodiment of the present invention may include:
A message statistics-collecting unit 124 is configured to collect statistics on a quantity of overload messages that belong to a first type in the received overload messages, where the first type is any message type in all message types to which the received overload messages belong.

In a specific implementation, the message statistics-collecting unit 124 collects statistics on the quantity of overload messages that belong to the first type in the received overload messages, where the first type is any message type in all message types to which each overload message in the received overload messages belongs.

A first processing unit 125 is configured to: when the quantity of overload messages of the first type is greater than a first preset threshold corresponding to the first type, delete an overload message that belongs to the first message type, until a quantity of remaining overload messages that belong to the first type after the deletion is less than or equal to the first preset threshold, and add, to the message processing queue, the remaining overload messages that belong to the first type.

In a specific implementation, a first preset threshold may be set correspondingly for the quantity of overload messages of the first type. For a message type that has a deeper effect on user experience, such as a message type related to a handover request, network access, or bearer setup, a preset threshold corresponding to the message type thereof is higher. A manner of setting the preset threshold may be that the base station configures in advance for each message type or may set a threshold priority for each message type. The base station 1 dynamically allocates, according to the threshold priority of each message type, a preset threshold corresponding to each message type, and a sum of preset thresholds corresponding to all message types is less than the quantity of messages which the base station 1 can still continue to process in an overload flow control state.

When the quantity of overload messages of the first type is greater than the first preset threshold corresponding to the first type, the first processing unit 125 deletes an overload message that belongs to the first type, until a quantity of remaining overload messages that belong to the first type after the deletion is less than or equal to the first preset threshold, and adds, to the message processing queue, the remaining overload messages that belong to the first type. It should be noted that a manner of deleting the overload messages of the first type by the first processing unit 125 may be that the base station deletes a preset quantity of overload messages of the first type within each time step. For example: in an overflow control state, for a message type of a network access message, when a preset threshold of this message type is 10, and 20 overload messages that belong to this message type are received, the base station may correspondingly delete 5 overload messages that belong to this message type every 1 second.

It should be noted that in a process of deleting the overload messages of the first type, when the base station 1 switches from an overload flow control state to a non-overload flow control state, the first processing unit 125 may not need to continue deleting the overload messages of the first type, and the first processing unit 125 adds, to the message processing queue, the remaining overload messages that belong to the first type.

A second processing unit 126 is configured to: when the quantity of overload messages of the first type is less than or equal to the first preset threshold corresponding to the first type, add the received overload message to the message processing queue.

In a specific implementation, when the quantity of overload messages of the first type is less than or equal to the first preset threshold corresponding to the first type, the second processing unit 126 directly adds the received overload message to the message processing queue.

The message processing module 13 is configured to sequentially process the messages in the message processing queue.

In a specific implementation, the message processing module 13 performs response processing on the messages in the message processing queue according to a first in first out processing sequence.

In the embodiment of the present invention, a base station correspondingly presets a threshold for each message type, so as to ensure that a more important message type corresponds to a higher preset threshold, so that the base station can reserve an important message to a greatest extent in an overload flow control state, thereby reducing a probability that user equipment cannot be properly used due to discarding of a message, improving message processing intelligence of the base station, and improving user experience.

FIG. 8 is a schematic structural diagram of yet another base station according to an embodiment of the present invention. As shown in FIG. 8, the base station 1 of the embodiment of the present invention may include a determining module 11, a queue updating module 12, a message processing module 13, and a second storage module 15.

The determining module 11 is configured to: when the base station in an overload flow control state receives at least one overload message, determine a message type of the received overload message.

In a specific implementation, when the base station 1 receives at least one overload message in the overload flow control state, the determining module 11 determines a message type of each overload message in the received overload messages.

The second storage module 15 is configured to store preset message type information.

In a specific implementation, message type information is preset in the base station 1, and the second storage module 15 stores the preset message type information, where the message type information may be preset categories of the message types, and the preset message type may be a message type that affects user experience, such as a message type related to a handover request, network access, or bearer setup.

The queue updating module 12 is configured to update a message processing queue according to the message type of the received overload message.

In a specific implementation, the queue updating module 12 adjusts the received overload message according to the message type of the overload message received by the determining module 11, and the queue updating module 12 adds an adjusted overload message to the message processing queue to update the message processing queue.

It should be noted that the queue updating module 12 determines the message type of the received overload message, and when the message type of the received overload message belongs to the preset message type stored in the second storage module 15, adds the overload message to the message processing queue; when the message type of the received overload message do not belong to the preset message type stored in the second storage module 15, discards the overload message.

Specifically, the queue updating module 12 of the embodiment of the present invention may include:
A second adding unit 127 is configured to: when the message type of the received overload message belongs to the preset message type, add the overload message to the message processing queue.

In a specific implementation, when the message type of the overload message received by the determining module 11 belongs to one of categories of the preset message types stored in the second storage module 15, the second adding unit 127 adds the overload message that belongs to the preset message type to the message processing queue.

A second discarding unit 128 is configured to: when the message type of the received overload message does not belong to a preset message type, discard the overload message.

In a specific implementation, when the message type of the overload message received by the determining module 11 does not belong to the preset message type stored in the second storage module 15, the second discarding unit 128 discards the overload message that does not belong to the preset message type.

The message processing module 13 is configured to sequentially process the messages in the message processing queue.

In a specific implementation, the message processing module 13 performs response processing on the messages in the message processing queue according to a first in first out processing sequence.

In the embodiment of the present invention, a base station determines, by using preset message type information, whether a message type of a received overload message belongs to a preset message type, so that an important message can be reserved, thereby avoiding discarding the important message when the base station performs overload flow control, further reducing a probability that user equipment cannot be properly used due to discarding of a message, improving message processing intelligence of the base station, and improving user experience.

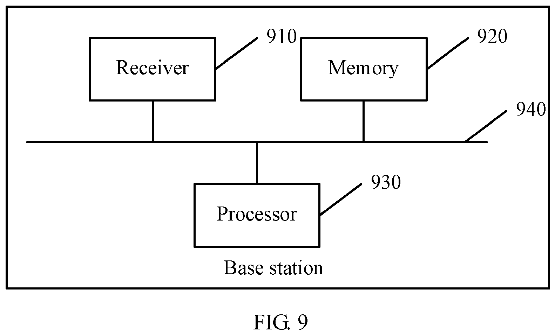

FIG. 9 is a schematic structural diagram of yet another base station according to an embodiment of the present invention. The base station may include: a receiver 910, a memory 920, and a processor 930 that is separately connected to the receiver 910 and the memory 920; and may further include a communications bus 940. The receiver 910 is configured to receive a message; the memory 920 stores program code; and the processor is configured to invoke the program code stored in the memory 920, where the receiver 910, the memory 920, and the processor 930 may be interconnected and communicate with one another by using the communications bus 940, and the processor 930 performs the following steps:
when the receiver 910 of the base station in an overload flow control state receives at least one overload message, determining a message type of the received overload message;
updating a message processing queue according to the message type of the received overload message; and
sequentially processing messages in the message processing queue.

In a first feasible implementation manner of the present invention, message type priorities are preset in the memory 920, and when updating the message processing queue according to the message type of the received overload message, the processor 930 specifically performs the following steps:
sorting received overload messages according to the message type priorities and according to message types of the received overload messages, to form an overload message sequence; and
sequentially adding messages in the overload message sequence to the message processing queue until a quantity of messages in the message processing queue is beyond a processing capability of the base station.

The processor 930 may further perform the following steps:
discarding, when the quantity of messages in the message processing queue is beyond the processing capability of the base station, an overload message that is in the overload message sequence and is not added to the message processing queue.

In a second feasible implementation manner of the present invention, when updating the message processing queue according to the message type of the received overload message, the processor 930 specifically performs the following steps:
collecting statistics on a quantity of overload messages that belong to a first type in the received overload messages, where the first type is any message type in all message types to which the received overload messages belong; and
when the quantity of overload messages of the first type is greater than a first preset threshold corresponding to the first type, deleting an overload message that belongs to the first message type, until a quantity of remaining overload messages that belong to the first type after the deletion is less than or equal to the first preset threshold, and adding, to the message processing queue, the remaining overload messages that belong to the first type; or
when the quantity of overload messages of the first type is less than or equal to the first preset threshold corresponding to the first type, adding the received overload message to the message processing queue.

When deleting an overload message that belongs to the first message type, the processor 930 specifically performs the following steps:
deleting a preset quantity of overload messages of the first type within each time step.

In a third feasible implementation manner of the present invention, message type information is preset in the memory 920, and when updating the message processing queue according to the message type of the received overload message, the processor 930 specifically performs the following steps:
when the message type of the received overload message belongs to a preset message type, adding the overload message to the message processing queue; or
when the message type of the received overload message does not belong to a preset message type, discarding the overload message.

In the embodiment of the present invention, a base station updates a message processing queue according to a message type of an overload message received in an overload flow control state, so that the base station can reserve and process some important messages, thereby reducing a probability that user equipment cannot be properly used due to discarding of a message, improving message processing intelligence of the base station, and improving user experience.

Based on the foregoing descriptions of the embodiments, a person skilled in the art may clearly understand that the present invention may be implemented by hardware, firmware, or a combination thereof. If the present invention is implemented by software, the foregoing functions may be stored in a computer-readable medium or are transmitted to the computer-readable medium in a form of one or more instructions or code. The computer-readable medium is either a computer storage medium or a communications medium, where the communications medium includes any medium that enables a computer program to be transmitted from one place to another place. The storage medium may be any available medium that may be accessed by a computer. For example, such a computer-readable medium may include but is not limited to a RAM, a ROM, an EEPROM, a CD-ROM or another optical disc storage, a magnetic disk storage medium or another magnetic storage device, or any other medium that may be used to bear or store program code in an expected form of an instruction or a data structure and that can be accessed by a computer. In addition, any connection may be appropriately defined as a computer-readable medium. For example, if software is transmitted from a website, a server, or another remote source by using a coaxial cable, an optical fiber cable, a twisted pair, a digital subscriber line (DSL) or a wireless technology, such as infrared, radio, or microwave, the coaxial cable, the optical fiber cable, the twisted pair, or the wireless technology, such as infrared, radio, and microwave, are included in the defined medium. The disk (disk) and the disc (disc) include a compressed disk (CD), a laser disk, an optical disc, a digital versatile disc (DVD), a floppy disk, and a blue-ray disk. The disk generally copies data by a magnetic means, and the disc generally copies data optically by a laser means. The foregoing combination may also be included in the protection scope of the computer-readable medium.

The disclosed are merely exemplary embodiments of the present invention, but are not intended to limit the scope of the present invention. Equivalent variation figured out according to the claims of the present invention shall fall within the protection scope of the present invention.

## Claims

1. A message processing method at a base station, comprising:
determining (S101), by a base station when receiving at least one overload message in an overload flow control state, a message type of the received overload message;
updating (S102) a message processing queue according to the message type of the received overload message; and
sequentially processing (S103) messages in the message processing queue, wherein message type priorities are preset in the base station, and the updating a message processing queue according to the message type of the received overload message comprises:
sorting (S202) received overload messages according to the message type priorities and according to message types of the received overload messages, to form an overload message sequence; and
sequentially adding (S203) messages in the overload message sequence to the message processing queue until a quantity of messages in the message processing queue is beyond a processing capability of the base station.

2. The method according to claim 1, further comprising:
discarding, when the quantity of messages in the message processing queue is beyond the processing capability of the base station, an overload message that is in the overload message sequence and is not added to the message processing queue.

3. A base station (1), comprising:
a determining module (11), configured to: when the base station in an overload flow control state receives at least one overload message, determine a message type of the received overload message;
a queue updating module (12), configured to update a message processing queue according to the message type of the received overload message;
a message processing module (13), configured to sequentially process messages in the message processing queue;
a first storage module (14), configured to store preset message type priorities, wherein
the queue updating module comprises:
a message sorting unit (121), configured to sort received overload messages according to the message type priorities and according to message types of the received overload messages, to form an overload message sequence; and
a first adding unit (122), configured to sequentially add messages in the overload message sequence to the message processing queue until a quantity of messages in the message processing queue is beyond a processing capability of the base station.

4. The base station according to claim 3, wherein the queue updating module further comprises:
a first discarding unit, configured to: when the quantity of messages in the message processing queue is beyond the processing capability of the base station, discard an overload message that is in the overload message sequence and is not added to the message processing queue.

5. A computer program product, embodied on a computer readable medium, wherein the computer program comprises a set of program code, used to perform all the method steps according to any one of claims 1 to 2 when said program is run on a computer.

## Patentansprüche

1. Nachrichtenverarbeitungsverfahren an einer Basisstation, umfassend:
Bestimmen (S101) durch eine Basisstation, wenn mindestens eine Überlastnachricht in einem Überlast-Flusssteuerzustand empfangen wird, eines Nachrichtentyps der empfangenen Überlastnachricht;
Aktualisieren (S102) einer Nachrichtenverarbeitungswarteschlange gemäß dem Nachrichtentyp der empfangenen Überlastnachricht; und
sequenzielles Verarbeiten (S103) von Nachrichten in der Nachrichtenverarbeitungswarteschlange, wobei in der Basisstation Nachrichtentypprioritäten voreingestellt sind und das Aktualisieren einer Nachrichtenverarbeitungswarteschlange gemäß dem Nachrichtentyp der empfangenen Überlastnachricht Folgendes umfasst:
Sortieren (S202) von empfangenen Überlastnachrichten gemäß den Nachrichtentypprioritäten und gemäß Nachrichtentypen der empfangenen Überlastnachrichten, um eine Überlastnachrichtensequenz zu bilden; und
sequenzielles Hinzufügen (S203) von Nachrichten in der Überlastnachrichtensequenz zu der Nachrichtenverarbeitungswarteschlange, bis eine Quantität von Nachrichten in der Nachrichtenverarbeitungswarteschlange über eine Verarbeitungsfähigkeit der Basisstation hinausgeht.

2. Verfahren nach Anspruch 1, ferner umfassend:
Verwerfen einer Überlastnachricht, die sich in der Überlastnachrichtensequenz befindet und nicht zu der Nachrichtenverarbeitungswarteschlange hinzugefügt wird, wenn die Quantität von Nachrichten in der Nachrichtenverarbeitungswarteschlange über die Verarbeitungsfähigkeit der Basisstation hinausgeht.

3. Basisstation (1), umfassend:
ein Bestimmungsmodul (11), das dafür ausgelegt ist, wenn die Basisstation in einem Überlast-Flusssteuerzustand mindestens eine Überlastnachricht empfängt, einen Nachrichtentyp der empfangenen Überlastnachricht zu bestimmen;
ein Warteschlangenaktualisierungsmodul (12), ausgelegt zum Aktualisieren einer Nachrichtenverarbeitungswarteschlange gemäß dem Nachrichtentyp der empfangenen Überlastnachricht;
ein Nachrichtenverarbeitungsmodul (13), ausgelegt zum sequenziellen Verarbeiten von Nachrichten in der Nachrichtenverarbeitungswarteschlange;
ein erstes Speichermodul (14), ausgelegt zum Speichern von voreingestellten Nachrichtentypprioritäten, wobei das Warteschlangenaktualisierungsmodul Folgendes umfasst:
eine Nachrichtensortiereinheit (121), ausgelegt zum Sortieren von empfangenen Überlastnachrichten gemäß den Nachrichtentypprioritäten und gemäß Nachrichtentypen der empfangenen Überlastnachrichten, um eine Überlastnachrichtensequenz zu bilden; und
eine erste Hinzufügeeinheit (122), ausgelegt zum sequenziellen Hinzufügen von Nachrichten in der Überlastnachrichtensequenz zu der Nachrichtenverarbeitungswarteschlange, bis eine Quantität von Nachrichten in der Nachrichtenverarbeitungswarteschlange über eine Verarbeitungsfähigkeit der Basisstation hinausgeht.

4. Basisstation nach Anspruch 3, wobei das Warteschlangenaktualisierungsmodul ferner Folgendes umfasst:
eine erste Verwerfeinheit, die dafür ausgelegt ist, wenn die Quantität von Nachrichten in der Nachrichtenverarbeitungswarteschlange über die Verarbeitungsfähigkeit der Basisstation hinausgeht, eine Überlastnachricht, die sich in der Überlastnachrichtensequenz befindet und nicht zu der Nachrichtenverarbeitungswarteschlange hinzugefügt wird, zu verwerfen.

5. Computerprogrammprodukt, das auf einem computerlesbaren Medium realisiert ist, wobei das Computerprogramm eine Menge von Programmcode umfasst, womit alle Verfahrensschritte gemäß einem der Ansprüche 1 bis 2 ausgeführt werden, wenn das Programm auf einem Computer laufengelassen wird.

## Revendications

1. Procédé de traitement des messages au niveau d'une station de base, comprenant les étapes suivantes :
déterminer (S101), par une station de base, lorsqu'au moins un message de surcharge dans un état de régulation du débit de surcharge est reçu, un type de message du message de surcharge reçu ;
mettre à jour (S102) une file d'attente de traitement des messages conformément au type de message du message de surcharge reçu ; et
traiter séquentiellement (S103) des messages dans la file d'attente de traitement des messages, où des priorités des types de messages sont prédéfinies dans la station de base, et la mise à jour d'une file d'attente de traitement des message conformément au type de message du message de surcharge reçu comprend les étapes suivantes :
trier (S202) les messages de surcharge reçus conformément aux priorités des types de messages et conformément aux types de messages des messages de surcharge reçus, pour former une séquence de messages de surcharge ; et
ajouter séquentiellement (S203) des messages dans la séquence de messages de surcharge à la file d'attente de traitement des messages jusqu'à ce qu'une quantité de messages dans la file d'attente de traitement des messages dépasse une capacité de traitement de la station de base.

2. Procédé selon la revendication 1, comprenant en outre les étapes suivantes :
mettre à l'écart, lorsque la quantité de messages dans la file d'attente de traitement des messages dépasse la capacité de traitement de la station de base, un message de surcharge qui se trouve dans la séquence de messages de surcharge et qui n'est pas ajouté à la file d'attente de traitement des messages.

3. Station de base (1), comprenant :
un module de détermination (11), configuré pour : lorsque la station de base, dans un état de régulation du débit de surcharge, reçoit au moins un message de surcharge, déterminer un type de message du message de surcharge reçu ;
un module de mise à jour de file d'attente (12), configuré pour mettre à jour une file d'attente de traitement des messages conformément au type de message du message de surcharge reçu ;
un module de traitement des messages (13), configuré pour traiter séquentiellement des messages dans la file d'attente de traitement des messages ;
un premier module de stockage (14), configuré pour stocker des priorités de types de messages prédéfinies, où le module de mise à jour de file d'attente comprend :
une unité de tri de messages (121), configurée pour trier des messages de surcharge reçus conformément aux priorités des types de messages et conformément aux types de messages des messages de surcharge reçus, pour former une séquence de messages de surcharge ; et
une première unité d'ajout (122), configurée pour ajouter séquentiellement des messages dans la séquence de messages de surcharge à la file d'attente de traitement des messages jusqu'à ce qu'une quantité de messages dans la file d'attente de traitement des messages dépasse une capacité de traitement de la station de base.

4. Station de base selon la revendication 3, dans laquelle le module de mise à jour de file d'attente comprend en outre :
une première unité de mise à l'écart, configurée pour : lorsque la quantité des messages dans la file d'attente de traitement des messages dépasse la capacité de traitement de la station de base, mettre à l'écart un message de surcharge qui se trouve dans la séquence de messages de surcharge et qui n'est pas ajouté à la file d'attente de traitement des messages.

5. Produit programme informatique, intégré sur un support lisible par ordinateur, où le programme informatique comprend un ensemble de codes de programme utilisés pour exécuter toutes les étapes de procédé selon l'une quelconque des revendications 1 à 2, lorsque ledit programme est exécuté sur un ordinateur.
